# EUROPÄISCHE PATENTSCHRIFT

(11) **EP 1 675 973 B1**
(45) Veröffentlichungstag und Bekanntmachung des Hinweises auf die Patenterteilung: **19.12.2012**
(21) Anmeldenummer: 04802621.5
(22) Anmeldetag: 13.10.2004
(51) Int. Cl.: C23C 30/00, C23C 14/06, C22C 27/06

(54) **VERSCHLEISSSCHUTZSCHICHT**
ANTI-ABRASIVE LAYER
COUCHE DE PROTECTION CONTRE L'USURE

(30) Priorität: 15.10.2003 DE 10347981
(43) Veröffentlichungstag der Anmeldung: 05.07.2006
(73) Patentinhaber: Gühring, Jörg, 72458 Albstadt (DE)
(72) Erfinder: WEBER, Frank-R, 16727 Oberkrämer (DE)
(74) Vertreter: Meitinger, Thomas Heinz
(86) Internationale Anmeldenummer: PCT/DE2004/002308
(87) Internationale Veröffentlichungsnummer: WO 2005/038089

(56) Entgegenhaltungen:
- EP-A- 0 756 019
- EP-A- 1 219 723
- DE-A1- 10 212 383
- DE-A1- 19 609 647
- DE-A1- 19 818 782
- US-A- 6 033 734
- PATENT ABSTRACTS OF JAPAN Bd. 016, Nr. 394 (C-0976), 21. August 1992 (1992-08-21) & JP 04 128363 A (RAIMUZU:KK), 28. April 1992 (1992-04-28)
- MUENZ W-D ET AL: "PROPERTIES OF VARIOUS LARGE-SCALE FABRICATED TIALN- AND CRN-BASED SUPERLATTICE COATINGS GROWN BY COMBINED CATHODIC ARC-UNBALANCED MAGNETRON SPUTTER DEPOSITION" SURFACE AND COATINGS TECHNOLOGY, ELSEVIER, AMSTERDAM, NL, Bd. 125, Nr. 1-3, 1. Juni 1999 (1999-06-01), Seiten 269-277, XP001065416 ISSN: 0257-8972
- LEMBKE M I ET AL: "SIGNIFICANCE OF Y AND CR IN TIALN HARD COATINGS FOR DRY HIGH SPEED CUTTING" SURFACE ENGINEERING, INSTITUT OF MATERIALS, LONDON, GB, Bd. 17, Nr. 2, 2001, Seiten 153-158, XP008032308
- P.EH. HOVSEPIAN, W.-D. MÜNZ: "recent progress in large-scale production of nanoscale multilayer/superlattice hard coatings" VACUUM SURFACE ENGINEERING, SURFACE INSTRUMENTATION & VACUUM TECHNOLOGY, Bd. 69, 2003, Seiten 27-36, XP008049315 ELSEVIER
- S.YANG,X.LI AND D.G.TEER: "properties and performance of CrTialN multilayer hard coatings deposited using magneztrron sputter ion plating" INSTITUTE OF MATERIALS,MINERALS AND MINING, Bd. 18, Nr. 5, 2002, Seiten 391-396, XP008049319

## Beschreibung

Die vorliegende Erfindung bezieht sich auf die Vergütung von Werkzeugen mit Hilfe von harten Verschleißschutzschichten. Als Werkzeuge kommen spanabhebende Werkzeuge, insbesondere rotierende Schaftwerkzeuge, wie Bohrer, Senker, Gewindebohrer, Reibahlen, usw. zur spanabhebenden Bearbeitung von Metallen in Betracht. Bei den Verschleißschutzschichten handelt es sich um etwa 1 bis 7 um dicke Hartstoffschichten, die bevorzugt mittels PVD (Physical Vapor Deposition) auf der Werkzeugoberfläche abgeschieden werden.

Die Fachwelt ist seit geraumer Zeit bemüht, eine Verschleißschutzschicht für die trockene Bearbeitung von Metallen zu finden. Als trockene standfeste Bearbeitung bezeichnet man in diesem Zusammenhang die Zerspanung ohne Kühl- und Schmierflüssigkeit, aber auch die Zerspanung mit Minimalmengenschmierung.

Dabei ging man bei der Entwicklung der Schicht, insbesondere bei der Wahl des Schichtmaterials, von der Überlegung aus, dass das Werkzeug beim trockenen Spanen wesentlich höhere Temperaturen annimmt und dass diese unerwünschte Temperaturerhöhung reduziert werden kann, wenn ein möglichst hoher Anteil der Wärme nicht über das Werkzeug, sondern über die Späne abtransportiert wird. Es wurde daher in Erwägung gezogen, Materialien zu kombinieren, die entweder für eine hohe Warmhärte und/oder für eine hohe Oxidationsbeständigkeit und/oder für eine niedrige Wärmeleitfähigkeit bekannt waren.

Die am meisten verbreitete Verschleißschutzschicht besteht aus dem goldgelben Titannitrid TiN. TiN-Schichten sind universell einsetzbar. Schichten aus dem dunklen, blaurot schimmernden Titanaluminiumnitrid (Ti,Al)N sind bekannt für ihre hohe Warmhärte. Sie haben meist ein prozentuales Verhältnis der Titan- zu den Aluminiumatomen von 50:50 bzw. (Ti_{0,5,} Al_{0,5})N, gelegentlich auch verschoben in Richtung 40:60 bzw. (Ti_{0,4,} Al_{0,5})N. Bei der Vergütung von Werkzeugen finden sie Anwendung sowohl als Einzelschicht (siehe z.B. Gilles et al., Surface and Coatings Technology 94-95 (1997) 285-290) als auch als (Ti,Al)N/TiN-Mehrlagenschicht mit Zwischenlagen aus Titannitrid (siehe z.B. die sogenannte FIRE-Schicht der Gühring oHG).

CrN-Schichten werden für die Bearbeitung von Nichteisenmetallen empfohlen (siehe z.B. P. Hones, Surface and Coatings Technology 94-95 (1997) 398-402).

Bekannt sind auch MeCrAlY-Legierungen (Me = Metall) zur Beschichtung von Turbinenschaufeln. Sie erhöhen die Oxidationsbeständigkeit und die Wärmedämmung und damit die zulässige Temperatur und den Wirkungsgrad von Flugzeugtriebwerken (siehe z.B. W. Brandl et al-, Surface and Coatings Technology 94-95 (1997) 21-26).

Neuerdings wurde auch eine Viellagenschicht (multilayer) aus (Ti,Al)N und CrN bekannt (siehe z.B. I. Wadsworth et al., Surface and Coatings Technology 94-95 (1997) 315-321) . Ihre Oxidationsbeständigkeit war um so höher, je höher der Cr-Anteil war, jedenfalls bis zu Cr-Anteilen von 30 at.%. Im selben Labor wurden auch Schichten aus TiAlN mit geringfügigen Zusätzen von Cr und Y untersucht (Patentschrift DE 19818782), Anmeldedatum 27. April 1998).

Die JP 04188363 A beschreibt eine(Ti-Al-Cr)N-Verschleißschutzschicht für ein Hochgeschwindigkeits-Schneidwerkzeug zur Verbesserung dessen Hitzebeständigkeit sowie Abriebs- und Oxydationseigenschaften. Die XP-001065416 "Surface and Coatings Technology 125 (2000) 269-277" (MÜNZ) beschreibt eine Gegenüberstellung von fünf aus verschiedenen Materialzusammensetzungen aufgebauten Verschleißschutzschichten für einen "high speed steel".

Der Erfindung liegt daher die Aufgabe zugrunde, eine Verschleißschutzschicht der eingangs beschriebenen Aufgabe zu schaffen, die sich bei einfacher Herstellung durch ein überlegenes Verschleißverhalten, insbesondere bei der sogenannten Trockenbearbeitung und bei Minimalschmierung, auszeichnet und im Besonderen für hoch abrasive Anwendungen, wie z.B. für die Bearbeitung von Titanlegierungen, GGV und MMC sowie für das sogenannte High Speed Cutting (HSC).

Diese Aufgabe wird durch eine Verschleißschutzschicht mit den Merkmalen der Ansprüche 1 bzw. 4 gelöst.

Die Erfindung baut dabei auf dem. Inhalt der eigenen, früheren Patentanmeldung DE 102 12 383A1 auf, auf deren Inhalt hier ausdrücklich Bezug genommen wird und deren Offenbarung in diese Anmeldung mit einbezogen werden soll.

Im Zuge der Entwicklung der Erfindung wurden Werkzeuge aus HSS (high speed steel) und aus Hartmetall mit verschiedensten Schichten und Schichtsystemen aus folgenden Bestandteilen hergestellt und optimiert: Nitride der Metalle Chrom, Aluminium und Titan und ein geringfügiger Zusatz (etwa bis 1 at %) Yttrium zur Kornverfeinerung. Die Optimierung umfasste folgende Arbeitsgänge: (1) Beschichtung, (2) Analyse der Schichtzusammensetzung, Phasenbestimmung und Texturuntersuchung, (3) Fräsversuche mit verschiedenen Einsatzparametern, (4) Messung des Verschleißverhaltens während der Versuche, (5) Auswertung und Ergebnisse, (6) Beschichtung gleicher Werkzeuge mit einer Schicht mit veränderter prozentualer Zusammensetzung der Metallatome, usw.

Es wurde aufbauend auf den Versuchen, die zum Inhalt der älteren Patentanmeldung DE 102 12 383A1 geführt haben, herausgefunden, dass das beste Verschleißverhalten bei hoch abrasiven Anwendungen durch die erfindungsgemäße Steigerung des Cr-Anteils in der gesamten Schicht am Gesamtmetallgehalt auf Werte über 65 at % erzielt wird. Die Anteile von AI und Ti werden dabei entsprechend verringert auf 15 bis 23 at % bzw. 10 bis 15 at %. Wie die vergleichenden Anwendungstests zeigen, konnten die Standzeiten gegenüber dem. Stand der Technik entscheidend, nämlich auf das beinahe 2,5-fache verlängert werden.

Ein weiterer besonderer Aspekt der Erfindung ist, dass die Erfinder herausgefunden haben, dass eine Zweilagenschicht dann die höheren Standzeiten liefert, wenn die dickere Grundschicht mit einer dünnen CrN-Schicht abgedeckt wird, wobei wiederum der hohe Cr-Anteil in der Gesamtschicht ein wichtiger Aspekt ist.

Vorteilhafte Weiterbildungen sind Gegenstand der Unteransprüche.

Eine besonders abriebfeste Schicht, die sich für schwerst zerspanbare Materialien eignet ergibt sich dann, wenn die Schicht zwei Lagen hat, wobei die untere Lage von einer dickeren (TiAlCrκ)N-Grundschicht in der Zusammensetzung als homogene Mischphase gebildet ist, die von einer dünneren CrN-Deckschicht als obere Lage abgedeckt ist.

Als Element (K) zur Kornverfeinerung wird vorzugsweise Yttrium heran gezogen, wobei der prozentuale Anteil am Gesamt-Metallgehalt der Schicht unter 1 at%, vorzugsweise bei bis zu etwa 0,5 at% liegt.

Vorzugsweise liegt die Gesamtdicke der Schicht zwischen 1 und 7 um, da größere Dicken aufgrund zunehmender Schicht-Eigenspannungen zu Rissbildung neigen.

Bei Ausbildung einer zweilagigen Schicht wird die Dicke der unteren Schicht vorzugsweise zwischen 1 und 6 µm, und die Dicke der dünneren Deckschicht zwischen 0,15 bis 0,6 µm festgelegt.

Ein besonders guter Schichtaufbau lässt sich dann erzielen, wenn die Verschleißschutzschicht mittels kathodischer Lichtbogen-Verdampfung oder Hochraten-Magnetron-Zerstäubung abgeschieden wird.

Um die Haftung der Verschleißschutzschicht am Werkzeug zu verbessern, wird die die Verschleißschutzschicht tragende Oberfläche des Werkzeugs vorzugsweise einer Substratreinigung mittels plasmaunterstütztem Ätzen mittels Edelgas-Ionen, vorzugsweise Ar-Ionen unterzogen, was beispielsweise mittels Niedervolt-Bogenentladung durchgeführt werden kann, wie es in der Patentanmeldung DE 198 18 782 beschrieben ist.

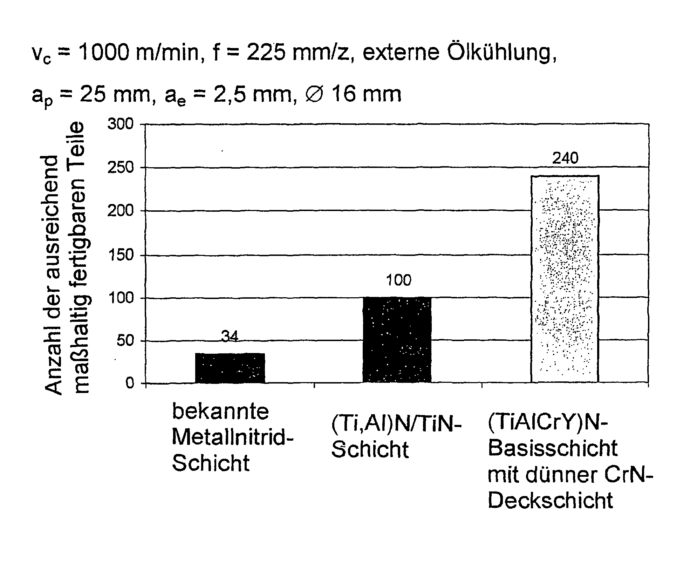

Im folgenden wird eine bevorzugte Ausführungsformen der erfindungsgemäßen Verschleißschutzschicht an Hand eines Beispiels beschrieben. Dabei wird auf die Figur Bezug genommen, die beispielhaft gemittelte Standwege beim Fräsen in Titan mit Wolframkarbid-Inlay darstellt, wobei ein metallnitrid-beschichtetes Werkzeug des Wettbewerbs, eine sogenannte GÜHRING-Fire-Schicht (Ti,Al)N/TiN und die erfindungsgemäße Schicht nach Anspruch 1 in der besonderen Variante nach Anspruch 2, d.h. mit einer dickeren (Ti, Al, Cr,Y) N-Grundschicht und einer dünnen CrN-Deckschicht, miteinander verglichen werden.

### Beispiele:

Mit Hilfe eines Arc-Beschichtungsverfahren wurde zunächst eine (Ti, Al, Cr, Y) N-Einzelschicht auf HSS- und Hartmetall-Fräswerkzeugen abgeschieden. Als Dampfquellen wurden eine Cr-Kathode und eine (Ti,AI, Y) -Kathode eingesetzt. Prozeßparameter: Substrattemperatur Tₛ = 450° C, Bias-Spannung U_{B}= -50 V, Gesamtionenstrom Jᵢₒₙ= 14 A auf die zu beschichtenden Probesubstrate, Kathodenstrom für die Cr- bzw. TiAlY-Kathoden Iₖ = 300 A, reines Stickstoffplasma (Stickstoffpartialdruck p_{N2} = 5 Pa).

Dem Beschichtungsprozess war eine Substratreinigung durch ein plasmaunterstütztes Ätzen (Beschuss mit Ar-Ionen aus einer Niedervoltbogenentladung) vorgeschaltet. Es wurden Vollhartmetallwerkzeuge beschichtet. Die Schichtdicke lag bei etwa 2,5 µm.

Die Bestimmung der atomaren Konzentrationen in der Schicht wurde anhand von Empfindlichkeitsfaktoren bestimmt, die von Cr, Ti, TiN, TiAlN und Y₂O₃ Standards ermittelt wurden. Der geringe Anteil von Kohlenstoff in der Schicht wurde vernachlässigt und bei der Konzentrationsbestimmung nicht berücksichtigt. Die auf die Metallatome in der Schicht bezogenen Konzentrationen wurden wie folgt eingestellt:

| | |
|---|---|
| Cr-Anteil: | 60 at% □ |
| Al-Anteil: | 16,5 at% □ |
| Ti-Anteil: | 23 at% □ |
| Y-Anteil: | 0,5 at% |

Die Phasenbestimmung der Schicht wurde wieder mittels Röntgenbeugung unter Θ - 2 Θ Geometrie mit Cu K_{α}-Strahlung durchgeführt (20 kV) . Es konnte gezeigt werden, dass es sich um eine nitridische Mischphase der Elemente Ti, Al und Cr mit einer <111> Textur handelt.

Anschließend wurde auf die Grundschicht eine dünne Deckschicht aus CrN - wieder im Are-Verfahren abgeschieden. Die Dicke der Deckschicht wurde bei etwa 0,4 um eingestellt. Die Prozessparameter waren:
Substrattemperatur Tₛ = 450° C, Bias-Spannung U_{B}= -50 V, , Entladungsstromstrom für die Cr-Kathode Iₖ = 300 A, Gesamtionenstrom auf die zu beschichtenden Werkzeuge bei CrN-Deposition Jᵢₒₙ= 9A, reines Stickstoffplasma (Stickstoffpartialdruck p_{N2} = 5 Pa).

Damit ergab sich eine Gesamtschicht, in der, bezogen auf alle Metallatome in der Schicht, der Cr-Anteil 65,6 at%, der Al-Anteil 14,2 at%, der Ti-Anteil 19,7 at und der Y-Anteil 0,5 at% betragen hat.

### Vergleichende Tests:

Die Hartmetallfräser mit der im Beispiel beschriebenen Schicht wurden in einem Feldversuch hinsichtlich ihres Standwegs in Proben folgenden Aufbaus getestet: Titan-Basiswerkstoff mit Wolframkarbid-Inlay. Es kamen Stirnfräser mit 16 mm Durchmesser zum Einsatz, wobei folgende Prozessparameter eingehalten wurden:
Schnittgeschwindigkeit 1000 m/min □
Externe Ölkühlung □
Zustellmaß ap = 25 mm □
Zustellmaß ae = 2,5 mm

Als Maß für den erzielbaren Standweg kann die Anzahl der Werkstücke herangezogen werden, die sich mit den Werkzeugen mit vorgegebener Gütetoleranz bearbeiten lassen.

Bei den vergleichenden Tests wurden Fräser identischer Geometrie mit herkömmlichen Schichten versehen, und zwar mit einer herkömmlichen Metallnitrid-Schicht und einer sogenannten GÜHRING-Fire-Schicht, d.h. einer (Ti,Al)N/TiN-Mehrlagen-Schicht.

Die Figur zeigt, dass sich mit dem erfindungsgemäß beschichteten Werkzeug eine Standzeit erzielen lässt, die weit über dem Zweifachen der Standzeit liegt, die sich mit einer GÜHRING-Fire-Mehrlagenschicht (Ti,Al)N/TiN erzielen lässt. Unter Heranziehung der Erkenntnisse und Versuchsergebnisse, die mit der Schicht nach der eigenen älteren Patentanmeldung DE 102 12 383 gewonnen und experimentell untermauert werden konnten, erlaubt dieses Testergebnis, die konkreten Werte für die Schicht mit entsprechenden Streubereichen anzugeben, wie sie in den Patentansprüchen enthalten sind.

Mit diesem vorstehend beschriebenen Beispiel wurde also gezeigt, daß mit der erfindungsgemäßen Verschleißschutzschicht ein hervorragendes Verschleißverhalten bei äußerst schwer zu bearbeitendem Werkstoff erreicht wird. Charakteristisch für die Verschleißschutzschicht ist nach wie vor, daß die Grundschicht in sich homogen ist und eine homogene kubische Mischphase darstellt. Das in die Schicht eingebaute Yttrium dient dabei der Kornverfeinerung. Darüber hinaus ist bei der Herstellung der erfindungsgemäßen Verschleißschutzschicht weder die Verwendung einer Haftvermittlungsschicht, noch eine nachgeschaltete spezielle Wärmebehandlung notwendig, so daß die erfindungsgemäße Verschleißschutzschicht einfach hergestellt werden kann.

Die Beschichtung wird vorzugsweise in einem reinen PVD-Verfahren (Kathodische Lichtbogenverdampfung) bei Substrattemperaturen von maximal 450°C abgeschieden.

Die Gesamtdicke der Verschleißschutzschicht liegt vorzugsweise im Bereich zwischen 1 und 7 µm.

## Patentansprüche

1. Verschleißschutzschicht für spanabhebende Werkzeuge, wie rotierende Zerspanungswerkzeuge, bestehend aus Nitriden mit den Metallkomponenten Cr, Ti und Al, wobei ein geringer Anteil von bis zu 1 at% des Elements Yttrium zur Kornverfeinerung vorgesehen ist, wobei die Verschleißschutzschicht zwei Lagen umfasst, wobei die untere Lage als eine dickere (TiAlCrY)N-Grundschicht in der Zusammensetzung als homogene Mischphase gebildet ist und wobei die obere Lage als eine dünnere CrN-Deckschicht ausgebildet ist, die die untere Lage abdeckt, **gekennzeichnet durch**
einen Cr-Anteil von über 65% bis 70%;
einen Al-Anteil von 15 bis 23%; und
einen Ti-Anteil von 10 bis 15%,
jeweils bezogen auf alle Metallatome in der gesamten Schicht.

2. Verschleißschutzschicht nach Anspruch 1, **dadurch gekennzeichnet, dass** der prozentuale Anteil von Yttrium am Gesamt-Metallgehalt der Schicht bei bis zu 0,5 at% liegt.

3. Verschleißschutzschicht nach Anspruch 1 oder 2, **dadurch gekennzeichnet, dass** die Gesamtdicke der Schicht zwischen 1 und 7 µm liegt.

4. Verschleißschutzschicht nach einem der Ansprüche 1 bis 3, **dadurch gekennzeichnet, dass** die Dicke der unteren Schicht zwischen 1 und 6 µm und die Dicke der dünneren Deckschicht 0,15 bis 0,6 µm beträgt.

5. Verschleißschutzschicht nach einem der Ansprüche 1 bis 4, **dadurch gekennzeichnet, dass** sie mittels kathodischer Lichtbogen-Verdampfung oder Magnetron- Zerstäubung abgeschieden ist.

6. Werkzeug mit einer Verschleißschutzschicht nach einem der vorhergehenden Ansprüche.

## Claims

1. Anti-wear coating for cutting tools, such as rotating cutting tools, consisting of nitrides with the metal components Cr, Ti and Al, wherein a small fraction of up to 1 at.% of the element yttrium is provided for grain refinement, wherein the anti-wear coating comprises two layers, wherein the lower layer is formed as a thicker (TiAlCrY)N base layer in the structure of a homogenous mixed phase and wherein the upper layer is formed as a thinner CrN covering layer covering the lower layer, **characterized by**
a chromium percentage of above 65% to 70%;
an aluminium percentage of 15 to 23%, and
a titanium percentage of 10 to 15%,
in each case with respect to all metal atoms in the entire coating.

2. Anti-wear coating according to claim 1, **characterized in that** the percentage of yttrium in the overall metal content of the coating is up to 0.5 at.%.

3. Anti-wear coating according to any one of claims 1 or 2, **characterized in that** the overall thickness of the coating is between 1 and 7 µm.

4. Anti-wear coating according to any one of claims 1 to 3, **characterized in that** the thickness of the lower layer is between 1 and 6 µm and the thickness of the thinner covering layer is 0.15 to 0.6 µm.

5. Anti-wear coating according to any one of claims 1 to 4, **characterized in that** it is deposited by means of cathodic arc evaporation or magnetron sputtering.

6. Tool with an anti-wear coating according to any one of the preceding claims.

## Revendications

1. Couche de protection contre l'usure pour outils d'enlèvement de copeaux, comme les outils d'usinage rotatifs, constituée de nitrures avec les composants métalliques Cr, Ti et Al, où une petite fraction allant jusqu'à 1 % atomique de l'élément yttrium est prévue pour l'affinage du grain, où la couche de protection contre l'usure comprend deux strates, où la strate inférieure prend la forme d'une couche d'apprêt plus épaisse en (TiAlCrY)N dans la composition en tant que phase mixte homogène et où la strate supérieure prend la forme d'une couche de couverture plus mince en CrN, qui couvre la strate inférieure, **caractérisée par** :
une proportion de Cr allant de plus de 65 % à 70 %;
une proportion de Al allant de 15 à 23 % ; et
une proportion de Ti allant de 10 à 15 %,
à chaque fois par rapport à tous les atomes métalliques dans la totalité de la couche.

2. Couche de protection contre l'usure selon la revendication 1, **caractérisée en ce que** la proportion d'yttrium en pourcentage sur la teneur totale en métaux de la couche peut atteindre jusqu'à 0,5 % atomique.

3. Couche de protection contre l'usure selon la revendication 1 ou 2, **caractérisée en ce que** l'épaisseur totale de la couche se situe entre 1 et 7 µm.

4. Couche de protection contre l'usure selon l'une des revendications 1 à 3, **caractérisée en ce que** l'épaisseur de la strate inférieure se situe entre 1 et 6 µm et l'épaisseur de la couche de couverture plus mince atteint 0,15 à 0,6 µm.

5. Couche de protection contre l'usure selon l'une des revendications 1 à 4, **caractérisée en ce qu'**elle est déposée au moyen d'une vaporisation cathodique par arc électrique ou d'une pulvérisation magnétron.

6. Outil comprenant une couche de protection contre l'usure selon l'une des revendications précédentes.
